# EUROPÄISCHE PATENTSCHRIFT

(11) **EP 1 291 744 B1**
(45) Veröffentlichungstag und Bekanntmachung des Hinweises auf die Patenterteilung: **25.04.2007**
(21) Anmeldenummer: 02018496.6
(22) Anmeldetag: 16.08.2002
(51) Int. Cl.: G05B 19/05, G05B 19/042

(54) **Synchronisationsverfahren und -vorrichtung**
Method and device for synchronisation
Procédé et dispositif de synchronisation

(30) Priorität: 06.09.2001 DE 10143756
(43) Veröffentlichungstag der Anmeldung: 12.03.2003
(73) Patentinhaber: SIEMENS AKTIENGESELLSCHAFT, 80333 München (DE)
(72) Erfinder: Graf, Rene, 76135 Karlsruhe (DE)

(56) Entgegenhaltungen:
- US-A- 5 301 308

## Beschreibung

Die Erfindung betrifft ein Synchronisationsverfahren und eine Synchronisationsvorrichtung für ein redundant aus mindestens zwei Teilsystemen aufgebautes Automatisierungssystem, bei dem die Teilsysteme zur Steuerung eines Prozesses jeweils mehrere Tasks ausführen und sich miteinander synchronisieren, sowie ein entsprechendes Automatisierungssystem.

Synchronisationsverfahren für Automatisierungssysteme sind allgemein bekannt. Bei dem Verfahren gemäß der EP-A-0 616 274 erfolgt die Synchronisation in Abhängigkeit von der tatsächlichen Laufzeit einer Folge von Maschinenbefehlen. Bei dem Verfahren gemäß der DE 196 25 195 A1 sind an miteinander korrespondierenden Stellen in die funktional identischen Folgen von Maschinenbefehlen Inkrementierungs-Anweisungen zur Inkrementierung eines jeweiligen Synchronisationszählers eingefügt. Die Synchronisation erfolgt anhand der Werte der Synchronisationszähler.

Die genannten Synchronisationsverfahren finden jedoch nur in einem speziell entwickelten Betriebssystem Anwendung. Bei der Verbesserung der Architektur, insbesondere der Zentraleinheiten (CPUs) der Automatisierungssysteme, muss auch das Betriebssystem angepasst werden. Dieses erfordert einen hohen Aufwand, da es mit tiefen Eingriffen in das System verbunden ist.

Die Teilsysteme weisen z. B. jeweils eine CPU auf, die für die Ausführung der Tasks zuständig ist. Die Tasks bestehen dabei aus einer Folge von Maschinenbefehlen. Eine CPU enthält einen so genannten Scheduler, der den Tasks Rechenzeit zuweist, wobei verschiedene Scheduler-Arten bekannt sind. Standard-CPUs, d. h. handelsübliche CPUs, die mit einem Standard-Betriebssystem betrieben werden, besitzen zumeist einen präemtiven Scheduler, der die Rechenzeit für die unterschiedlichen Tasks nach deren Priorität vergibt und dabei eine derzeit laufende Task sofort unterbricht, wenn eine Task höherer Priorität Rechenzeit beansprucht.

Sollen nun bestimmte Tasks, so genannte mehrkanalige Tasks, redundant auf mehreren Teilsystemen bzw. CPUs ausgeführt werden, so muss dieses synchron erfolgen, da ansonsten möglicherweise auf sich zwischen den Teilsystemen unterscheidende Daten zugegriffen wird und sich somit unterschiedliche Resultate nach der Abarbeitung der mehrkanaligen Tasks ergeben. Präemtive Scheduler können sich jedoch nicht entsprechend synchronisieren, und ein Eingriff in den Scheduler selbst ist nicht möglich.

Aufgabe der Erfindung ist es, ein Synchronisationsverfahren und eine Synchronisationsvorrichtung für ein redundant aus mindestens zwei Teilsystemen aufgebautes Automatisierungssystem, bei dem die Teilsysteme zur Steuerung eines Prozesses jeweils mehrere Tasks ausführen und sich miteinander synchronisieren, sowie ein entsprechendes Automatisierungssystem zu schaffen, die mit einem Standard-Betriebssystem eingesetzt werden können und möglichst geringe Änderungen an diesem Betriebssystem erfordern.

Die Aufgabe wird durch ein Synchronisationsverfahren und eine Synchronisationsvorrichtung sowie ein Automatisierungssystem gemäß den unabhängigen Ansprüchen gelöst. Unteransprüche sind auf bevorzugte Ausführungsformen gerichtet.

Bei dem erfindungsgemäßen Synchronisationsverfahren wird, wenn eine mehrkanalige Task eines der Teilsysteme aufgerufen werden soll, eine entsprechende Aufruf-Nachricht in einen Nachrichtenspeicher des einen Teilsystems eingetragen. Die Aufruf-Nachricht wird aus dem Nachrichtenspeicher ausgelesen und an die aufzurufende mehrkanalige Task weitergeleitet, wobei die Weiterleitung synchronisiert mit den übrigen Teilsystemen erfolgt.

Vorzugsweise ist der Nachrichtenspeicher in Form einer Nachrichtenliste ausgebildet.

Eine mehrkanalige Task ist eine Task, die redundant auf sämtlichen Teilsystemen auszuführen ist. Ein Teilsystem in diesem Sinne bezieht sich auf die Systeme, die für die redundante Abarbeitung von Tasks zuständig sind. Ein Automatisierungssystem kann darüber hinaus auch weitere Systeme aufweisen, die hier nicht Gegenstand der Erfindung sind.

Die Synchronisation der Teilsysteme bzw. ihrer CPUs erfolgt hier vorzugsweise unmittelbar vor der Weiterleitung der Aufruf-Nachricht. Erst nach Empfang der Aufruf-Nachricht fordert die aufgerufene Task Rechenzeit vom Scheduler an. Die Anforderung erfolgt somit synchron zu den übrigen Teilsystemen.

Vorteilhafterweise ist jedem Teilsystem eine eigene Nachrichtenliste zugeordnet, in die jeweilige Aufruf-Nachrichten des entsprechenden Teilsystems eingetragen werden. Bei einer synchronisierten redundanten Ausführung der mehrkanaligen Tasks erhalten damit die Nachrichtenlisten die gleichen Aufruf-Nachrichten. Somit kann für jedes Teilsystem die gleiche Aufruf-Nachricht synchron zu den anderen weitergeleitet werden.

Weiterhin werden von jeder CPU weitere, so genannte einkanalige Tasks ausgeführt, die mit der direkten Steuerung des Automatisierungsprozesses nichts zu tun haben und nur von der jeweiligen einen CPU, d. h. nicht redundant, ausgeführt werden müssen. Auch derartige einkanalige Tasks können mehrkanalige Tasks aufrufen. Sie können ebenfalls eine entsprechende Aufruf-Nachricht abschicken, die in die entsprechende Nachrichtenliste eingetragen wird.

Dasselbe kann für Unterbrechungsroutinen (Interrupt-Service-Routinen) zutreffen, die z. B. asynchron zu beliebigen Zeiten durch externe Ereignisse (Alarm, Signal) aktiviert werden und normalerweise ggf. den laufenden Prozess bzw. die laufende Task unterbrechen. Auch sie können eine entsprechende Aufruf-Nachricht zum Aufruf einer mehrkanaligen Task absenden, die in die entsprechende Nachrichtenliste eingetragen wird.

Wenn eine einkanalige Task oder eine Unterbrechungsroutine eine mehrkanalige Task aufruft, wird die entsprechende Aufruf-Nachricht beispielsweise nicht nur in die Nachrichtenliste des entsprechenden Teilsystems eingetragen, sondern auch an die übrigen Teilsysteme weitergeleitet, wo sie ebenfalls in die jeweilige Nachrichtenliste eingetragen wird. Hierdurch ist es den übrigen Teilsystemen, bei denen die einkanalige Task nicht ausgeführt wird und die somit von deren Aufruf einer mehrkanaligen Task nichts erfahren würden, möglich, einen entsprechenden Aufruf an die entsprechende eigene mehrkanalige Task weiterzuleiten bzw. zu senden.

Wenn hingegen eine einkanalige Task eines Teilsystems aufgerufen werden soll, so kann die entsprechende Aufruf-Nachricht ebenfalls in die entsprechende Nachrichtenliste eingetragen werden. Dann kann beispielsweise die Synchronisation der Teilsysteme bei einer folgenden Weiterleitung einer Aufruf-Nachricht an eine mehrkanalige Task erfolgen, so dass die übrigen Teilsysteme z. B. so lange warten, bis die einkanalige Task ausgeführt ist. Hierbei kann eine ggf. notwendige Laufzeitbegrenzung für die einkanalige Task vorgesehen sein. Währenddessen können in den übrigen Teilsystemen z. B. auch einkanalige Tasks ausgeführt werden, die der einkanaligen Task des einen Teilsystems gleichen können, aber auch andere sein können.

Wenn eine Task aktuell keine Rechenzeit mehr benötigt, weil sie z. B. beendet ist oder eine andere Task aufgerufen hat, kann sie eine entsprechende Freigabe-Nachricht weitergeben bzw. absenden. Daraufhin wird beispielsweise diejenige Aufruf-Nachricht der Nachrichtenliste des zugehörigen Teilsystems, die die höchste Priorität unter den in der Nachrichtenliste aufgelisteten Aufruf-Nachrichten hat, an die entsprechende aufzurufende Task weitergeleitet. Wenn die Empfängertask daraufhin Rechenzeit beansprucht, kann ihr diese auch von einem präemtiven Scheduler sofort zugewiesen werden, ohne dass gleichzeitig eine andere Task unterbrochen wird.

In einer vorteilhaften Ausführungsform werden die Aufruf-Nachrichten in der jeweiligen Nachrichtenliste ihrer Priorität nach sortiert, so dass z. B. stets die oberste bzw. an erster Stelle stehende Aufruf-Nachricht ausgelesen und weitergeleitet wird. Dieses erspart das Durchsuchen der Liste nach der Priorität beim Auslesen. Dabei kann die Priorität der Aufruf-Nachricht der Priorität ihrer jeweiligen Empfängertask entsprechen. Weiterhin können die Aufruf-Nachrichten einer jeweiligen Empfängertask - es ist möglich, dass mehrere Tasks und/oder Unterbrechungsroutinen dieselbe Task aufrufen - in der Nachrichtenliste nach der Priorität der aufrufenden Task und/oder Unterbrechungsroutine sortiert werden.

Im Folgenden werden beispielhafte Ausführungsformen der Erfindung anhand der Zeichnungen erläutert. Es zeigen:
- Fig. 1: ein Blockschaltbild einer erfindungsgemäßen Ausführungsform der Synchronisationsvorrichtung,
- Fig. 2: einen Ablaufplan einer erfindungsgemäßen Ausführungsform eines Teiles des Synchronisationsverfahrens und
- Fig. 3: einen Ablaufplan einer erfindungsgemäßen Ausführungsform eines anderen Teiles des Synchronisationsverfahrens.

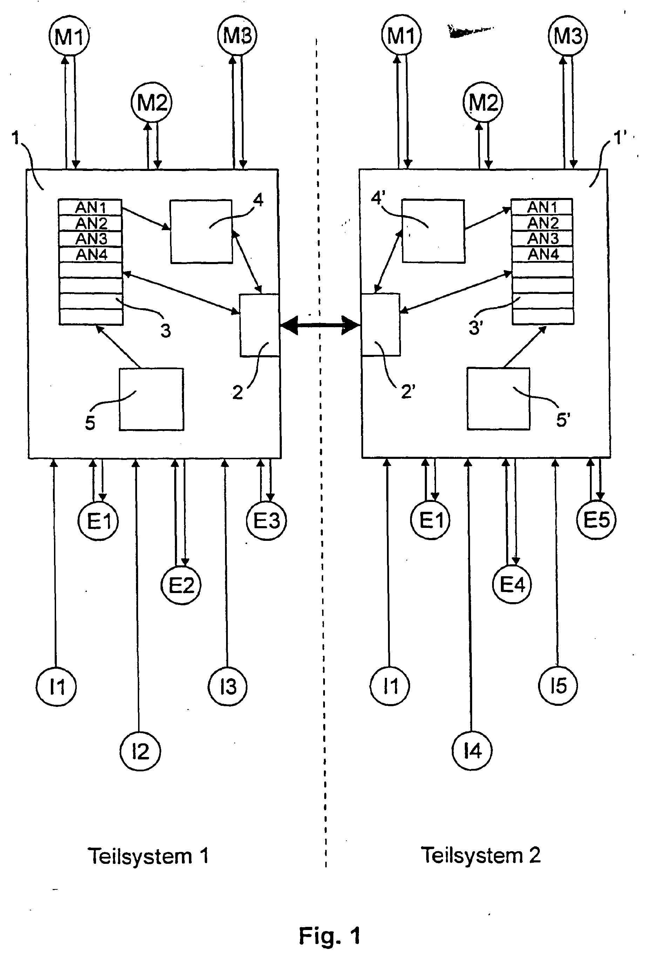

In Fig. 1 sind zwei Synchronisationsvorrichtungen 1, 1' gezeigt, die jeweils einem Teilsystem 1 bzw. einem Teilsystem 2 zugeordnet sind. Sie weisen jeweils ein Kommunikationsmittel 2, 2' auf, über die die Teilsysteme miteinander kommunizieren und sich synchronisieren. Die gezeigte schwarze Pfeilverbindung zwischen den Kommunikationsmitteln 2, 2' kann eine Verbindung über einen Daten- und/oder Steuer-Bus darstellen, kann jedoch auch jede andere geeignete Verbindung sein. Die Kommunikationsmittel 2, 2' sind hier nur beispielhaft dargestellt und können z. B. auch in einer Einrichtung zusammengefasst sein. Sie sind hier beispielhaft als Bestandteil der jeweiligen Synchronisationsvorrichtung 1, 1' dargestellt, können sich jedoch auch außerhalb dieser befinden, müssen also nicht Bestandteil der Synchronisationsvorrichtung 1, 1' selbst sein.

Weiterhin weisen die Synchronisationsvorrichtungen 1, 1' jeweils eine Nachrichtenliste 3, 3' auf, in denen sich eingetragene Aufruf-Nachrichten AN1 - AN4 befinden. Im gezeigten Beispiel befinden sich dieselben Aufruf-Nachrichten AN1 - AN4 in den beiden Nachrichtenlisten 3, 3'. Es können sich aber auch unterschiedliche weitere Aufruf-Nachrichten in den Nachrichtenlisten 3, 3' befinden bzw. dort eingetragen werden, die z. B. eine einkanalige Task betreffen, die nur in der Nachrichtenliste desjenigen Teilsystems eingetragen wird, in dem sie ausgeführt werden soll.

Eine jeweilige Nachrichtenverteileinrichtung 4, 4' liest z. B. die jeweils an oberster Stelle stehende Aufruf-Nachricht AN1 aus und leitet sie an die entsprechende Empfängertask weiter. Zuvor sortiert eine jeweilige Sortiereinrichtung 5, 5' die eingetragenen Aufruf-Nachrichten AN1 - AN4 z. B. ihrer Priorität nach, so dass die Aufruf-Nachricht AN1 mit der höchsten Priorität, die als Nächstes verteilt werden soll, an oberster Stelle der Nachrichtenliste 3, 3' steht.

Mit der jeweiligen Synchronisationsvorrichtung 1, 1' bzw. deren Einrichtungen kommunizieren verschiedene mehrkanalige Tasks M1 - M3, mehrere einkanalige Tasks E1 - E3 des Teilsystems 1 bzw. E1, E4, E5 des Teilsystems 2 und Unterbrechungsroutinen I1 - I3 des Teilsystems 1 bzw. I1, I4, I5 des Teilsystems 2. Die einkanaligen und mehrkanaligen Tasks E1 - E5, M1 - M3 können jeweils Nachrichten senden und empfangen. Dieses ist durch den jeweiligen Doppelpfeil angedeutet. Die Unterbrechungsroutinen I1 - I5 können hingegen nur Nachrichten senden, aber selbst nicht aufgerufen werden. Dieses ist durch den jeweiligen Einzelpfeil in Richtung Synchronisationsvorrichtung 1, 1' angedeutet.

Die mehrkanaligen Tasks M1 - M3 sind bei beiden Teilsystemen die gleichen, wohingegen sich die einkanaligen Tasks E1 - E5 sowie die Unterbrechungsroutinen I1 - I5 wie dargestellt zwischen den einzelnen Teilsystemen unterscheiden können. Die Nachrichtenverteileinrichtung 4, 4' kann z. B. erkennen, ob der Absender und/oder Empfänger einer jeweiligen Aufruf-Nachricht AN1 - AN4 eine einkanalige oder mehrkanalige Task oder eine Unterbrechungsroutine ist, um z. B. dann ggf. die entsprechende Aufruf-Nachricht über das Kommunikationsmittel 2, 2' an das andere Teilsystem weiterzuleiten.

Die Nachrichtenverteileinrichtung 4, 4' weist eine Verbindung zum entsprechenden Kommunikationsmittel 2, 2' auf, über das die Synchronisation mit dem anderen Teilsystem durchgeführt wird. Hierfür überprüfen z. B. die Kommunikationsmittel 2, 2', ob in den beiden Nachrichtenlisten 3, 3' jeweils die gleiche Aufruf-Nachricht AN1 an oberster Stelle steht. Ist dies der Fall, liegt eine Synchronisation vor, und es kann ein entsprechendes Signal an die Nachrichtenverteileinrichtung 4, 4' gesendet werden, die dann wiederum die entsprechende Aufruf-Nachricht AN1 an die entsprechende Empfängertask synchronisiert weiterleitet.

Die in Fig. 1 angedeuteten zwei Teilsysteme können entsprechend auf noch mehr (redundante) Teilsysteme erweitert werden, wobei die einzelnen Teilsysteme untereinander in Verbindung stehen. Dieses kann z. B. in einfacher Weise über einen Bus geschehen.

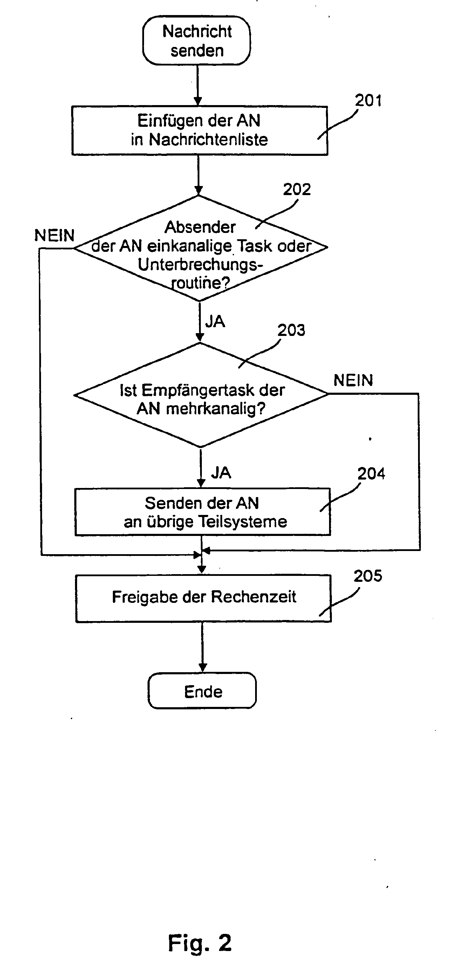

In Fig. 2 ist der Ablauf von Verfahrensschritten dargestellt, die beispielsweise ausgeführt werden, wenn eine Task aufgerufen werden soll. Es wird dann entsprechend eine Funktion "Nachricht senden" aufgerufen, bei der im Schritt 201 die entsprechende Aufruf-Nachricht AN in die zugehörige Nachrichtenliste eingetragen wird. Danach wird im Schritt 202 abgefragt, ob der Absender dieser Aufruf-Nachricht AN eine einkanalige Task oder eine Unterbrechungsroutine ist. Ist dies der Fall, wird im Schritt 203 abgefragt, ob die Empfängertask der Aufruf-Nachricht AN mehrkanalig ist. Ist dies ebenfalls der Fall, wird die Aufruf-Nachricht AN an die übrigen Teilsysteme gesendet, wo sie in die jeweiligen Nachrichtenlisten eingetragen wird. Danach wird im Schritt 205 die Rechenzeit freigegeben, d. h. z. B. von der aufrufenden Task mitgeteilt, dass sie keine Rechenzeit mehr benötigt. Wird die Abfrage im Schritt 202 oder die Abfrage im Schritt 203 verneint, wird sofort zum Schritt 205 übergegangen. Danach ist die Funktion "Nachricht senden" beendet.

Der Schritt 201, d. h. das Einfügen der AN in die Nachrichtenliste, kann aber z. B. auch erst nach oder ggf. gleichzeitig mit dem Schritt 204, d. h. dem Senden der AN an die übrigen Teilsysteme, erfolgen. Ebenso können die Schritte 202 und 203 in umgekehrter Reihenfolge ausgeführt werden.

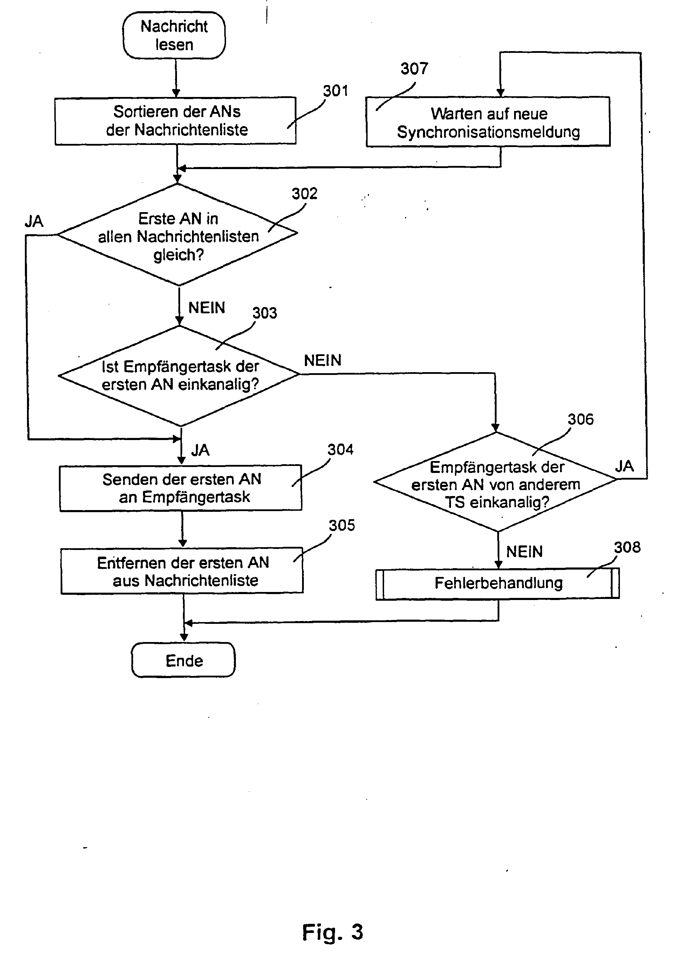

In Fig. 3 ist der Ablauf von Verfahrensschritten einer Funktion "Nachricht lesen" dargestellt, die beispielsweise ausgeführt werden, wenn eine Task zur erneuten Ausführung bereit ist, d. h. auf eine Aufruf-Nachricht wartet. Im Schritt 301 werden zunächst die Aufruf-Nachrichten AN der Nachrichtenliste sortiert, vorzugsweise nach ihrer Priorität. Danach wird im Schritt 302 abgefragt, ob die nach der Sortierung an oberster bzw. erster Stelle stehende Aufruf-Nachricht AN in allen Nachrichtenlisten der übrigen Teilsysteme ebenfalls an oberster bzw. erster Stelle steht. Die relevante Stelle bzw. Position in der Nachrichtenliste muss jedoch nicht unbedingt die oberste bzw. erste sein, sondern kann auch die unterste bzw. letzte oder jede andere geeignete Stelle sein.

Wird die Abfrage im Schritt 302 verneint, wird im Schritt 303 abgefragt, ob die Empfängertask der ersten Aufruf-Nachricht der Nachrichtenliste einkanalig ist. Ist dies der Fall oder wird die Abfrage im Schritt 302 bejaht, wird im Schritt 304 die erste Aufruf-Nachricht AN der Nachrichtenliste an die entsprechende Empfängertask weitergeleitet und im nachfolgenden Schritt 305 aus der Nachrichtenliste entfernt, womit die Funktion "Nachricht lesen" beendet ist.

Wird die Abfrage im Schritt 303 verneint, d. h., dass die Empfängertask mehrkanalig ist, wird im Schritt 306 abgefragt, ob die Empfängertask einer oder mehrerer an erster Stelle stehenden Aufruf-Nachrichten der übrigen Teilsysteme einkanalig ist. Ist dies der Fall, wird im Schritt 307 auf eine neue Synchronisationsmeldung eines oder mehrerer der anderen Teilsysteme gewartet, die z. B. die Beendigung der Ausführung der einkanaligen Task melden, so dass danach im Schritt 302 wieder überprüft werden kann, ob nun in jeder Nachrichtenliste die gleiche Aufruf-Nachricht AN an erster Stelle steht.

Wird die Abfrage im Schritt 306 jedoch verneint, so ist z. B. ein Synchronisationsverlust aufgetreten, der dann im Schritt 308 durch Aufrufen einer bekannten Fehlerbehandlungsroutine oder -funktion, die nicht Gegenstand der Erfindung ist, behandelt werden kann.

Die Reihenfolge der in den Fig. 2 und 3 aufgeführten Verfahrensschritte ist nur beispielhaft. Sie kann in für den Fachmann ersichtlich sinnvoller Weise geändert werden. Des Weiteren können ggf. einzelne, nur beispielhaft aufgeführte Schritte weggelassen oder weitere hinzugefügt werden.

Die bei herkömmlichen Standard-Betriebssystemen verfügbaren Funktionen "Nachricht lesen" und "Nachricht senden" - die Namen können je nach Betriebssystem anders lauten -, über die z. B. die einzelnen Tasks miteinander kommunizieren, d. h. sich z. B. gegenseitig aufrufen, können in vorteilhafter Weise durch die erfindungsgemäßen Schritte, wie sie beispielhaft in den Fig. 2 und 3 aufgeführt sind, benutzt oder modifiziert bzw. erweitert werden, so dass für den Anwender auch nach der Änderung sozusagen die gleichen Funktionen oder erweiterte Funktionen verfügbar sind. Damit braucht sich der Anwender nicht darum zu kümmern, ob er eine einzelne Standard-CPU programmiert oder ein aus mehreren CPUs bestehendes redundantes System, da die Schnittstelle, d. h. Nachrichtenschnittstelle, für ihn die gleiche ist, auch wenn diese anderen Mechanismen folgt.

## Patentansprüche

1. Synchronisationsverfahren für ein redundant aus mindestens zwei Teilsystemen aufgebautes Automatisierungssystem, bei dem die Teilsysteme zur Steuerung eines Prozesses jeweils mehrere Tasks (M1 - M3; E1 - E5) ausführen und sich miteinander synchronisieren,
**dadurch gekennzeichnet, dass,**
- wenn eine mehrkanalige Task (M1 - M3) eines der Teilsysteme, die redundant von den Teilsystemen auszuführen ist, aufgerufen werden soll, eine entsprechende Aufruf-Nachricht (AN1 - AN4) in einen Nachrichtenspeicher, insbesondere in Form einer Nachrichtenliste (3, 3'), des einen Teilsystems eingetragen wird und
- die Aufruf-Nachricht (AN1 - AN4) aus dem Nachrichtenspeicher ausgelesen und an die aufzurufende mehrkanalige Task (M1 - M3) weitergeleitet wird, wobei die Weiterleitung synchronisiert mit den übrigen Teilsystemen erfolgt.

2. Synchronisationsverfahren nach Anspruch 1, **dadurch gekennzeichnet, dass** jedes Teilsystem eine Nachrichtenliste (3, 3') aufweist, in die jeweilige Aufruf-Nachrichten (AN1 - AN4) eingetragen werden, wobei bei der synchronisierten Weiterleitung die der Aufruf-Nachricht (AN1 - AN4) des einen Teilsystems entsprechenden Aufruf-Nachrichten (AN1 - AN4) der entsprechenden mehrkanaligen Tasks (M1 - M3) der übrigen Teilsysteme entsprechend weitergeleitet werden.

3. Synchronisationsverfahren nach Anspruch 1 oder 2, **dadurch gekennzeichnet, dass**, wenn eine einkanalige Task (E1 - E5) und/oder eine Unterbrechungsroutine (I1 - 15), die nicht redundant von den Teilsystemen ausgeführt werden, eine mehrkanalige Task (M1 - M3) aufrufen, die entsprechende Aufruf-Nachricht (AN1 - AN4) an die übrigen Teilsysteme weitergeleitet wird, wo sie in die jeweilige Nachrichtenliste (3, 3') eingetragen, ausgelesen und synchronisiert an die entsprechende mehrkanalige Task (M1 - M3) des jeweiligen Teilsystems weitergeleitet wird.

4. Synchronisationsverfahren nach einem der vorherigen Ansprüche, **dadurch gekennzeichnet, dass,** wenn eine einkanalige Task (E1 - E5) eines der Teilsysteme aufgerufen werden soll, eine entsprechende Aufruf-Nachricht (AN1 - AN4) in die Nachrichtenliste (3, 3') des einen Teilsystems eingetragen wird, die Aufruf-Nachricht (AN1 - AN4) aus der Nachrichtenliste (3, 3') ausgelesen und an die aufzurufende einkanalige Task (E1 - E5) weitergeleitet wird, wobei sich die Teilsysteme erst bei oder unmittelbar vor einem folgenden Aufruf einer mehrkanaligen Task (M1 - M3) synchronisieren.

5. Synchronisationsverfahren nach einem der vorherigen Ansprüche, **dadurch gekennzeichnet, dass,** wenn eine Task (M1 - M3; E1 - E5) aktuell keine Rechenzeit mehr benötigt, diese Task (M1 - M3; E1 - E5) eine entsprechende Freigabe-Nachricht weitergibt, woraufhin die Aufruf-Nachricht (AN1 - AN4) der Nachrichtenliste (3, 3') des zugehörigen Teilsystems, die die höchste Priorität unter den in der Nachrichtenliste (3, 3') aufgelisteten Aufruf-Nachrichten (AN1 - AN4) hat, an die entsprechende aufzurufende Task (M1 - M3; E1 - E5) weitergeleitet wird.

6. Synchronisationsverfahren nach einem der vorherigen Ansprüche, **dadurch gekennzeichnet, dass** die Aufruf-Nachrichten (AN1 - AN4) der jeweiligen Nachrichtenliste (3, 3') nach ihrer Priorität sortiert werden.

7. Synchronisationsverfahren nach einem der vorherigen Ansprüche, **dadurch gekennzeichnet, dass** die Priorität einer Aufruf-Nachricht (AN1 - AN4) der Priorität der entsprechenden aufzurufenden Task (M1 - M3; E1 - E5) entspricht.

8. Synchronisationsverfahren nach einem der vorherigen Ansprüche, **dadurch gekennzeichnet, dass** die Aufruf-Nachrichten (AN1 - AN4) der jeweiligen Nachrichtenliste (3, 3') nach der Priorität der sie aufrufenden Task (M1 - M3; E1 - E5) und/oder Unterbrechungsroutine (I1 - I5) sortiert werden.

9. Synchronisationsvorrichtung (1, 1') für ein redundant aus mindestens zwei Teilsystemen aufgebautes Automatisierungssystem, bei dem die Teilsysteme zur Steuerung eines Prozesses jeweils mehrere Tasks (M1 - M3; E1 - E5) ausführen und über ein oder mehrere Kommunikationsmittel (2, 2') miteinander verbunden sind, über das oder die sie sich miteinander synchronisieren,
**gekennzeichnet durch**
- einen Nachrichtenspeicher, insbesondere in Form einer Nachrichtenliste (3, 3'), in den, wenn eine mehrkanalige Task (M1 - M3) des jeweiligen Teilsystems aufgerufen werden soll, die redundant von den Teilsystemen auszuführen ist, eine entsprechende Aufruf-Nachricht (AN1 - AN4) eingetragen wird, und
- eine mit mindestens einem der Kommunikationsmittel (2, 2') und dem Nachrichtenspeicher verbundene Nachrichtenverteileinrichtung (4, 4'), die die Aufruf-Nachricht (AN1 - AN4) aus dem Nachrichtenspeicher ausliest und an die entsprechende aufzurufende, mehrkanalige Task (M1 - M3) weiterleitet, wobei die Weiterleitung synchronisiert mit den übrigen Teilsystemen erfolgt.

10. Synchronisationsvorrichtung nach Anspruch 9, **dadurch gekennzeichnet, dass** die Nachrichtenverteileinrichtung (4, 4'), wenn sie erkennt, dass eine einkanalige Task (E1 - E5) und/oder eine Unterbrechungsroutine, die nicht redundant von den Teilsystemen ausgeführt werden, eine mehrkanalige Task aufrufen, die entsprechende Aufruf-Nachricht (AN1 - AN4) an die übrigen Teilsysteme zur Eintragung in die jeweilige Nachrichtenliste (3, 3') weiterleitet.

11. Synchronisationsvorrichtung nach Anspruch 9 oder 10, **gekennzeichnet durch** eine Sortiereinrichtung (5, 5'), die die Aufruf-Nachrichten (AN1 - AN4) der Nachrichtenliste (3, 3') nach ihren Prioritäten sortiert.

12. Redundant aus mindestens zwei Teilsystemen aufgebautes Automatisierungssystem, bei dem die Teilsysteme zur Steuerung eines Prozesses jeweils mehrere Tasks ausführen und durch ein Kommunikationsmittel miteinander verbunden sind, über das sie sich miteinander synchronisieren, **dadurch gekennzeichnet, dass** jedem Teilsystem eine Synchronisationsvorrichtung nach einem der Ansprüche 9 bis 11 zugeordnet ist.

## Claims

1. Synchronization method for an automation system of redundant design comprising at least two subsystems, in which the subsystems control a process by respectively executing a plurality of tasks (M1 - M3; E1 - E5) and synchronizing themselves to one another,
**characterized in that**
- if it is necessary to call a multi-channel task (M1 - M3) of one of the subsystems which is to be executed redundantly by the subsystems then a corresponding call message (AN1 - AN4) is entered into a message store, particularly in the form of a message list (3, 3'), in the one subsystem, and
- the call message (AN1 - AN4) is read from the message store and is forwarded to the multi-channel task (M1 - M3) which is to be called, the forwarding taking place in sync with the other subsystems.

2. Synchronization method according to Claim 1, **characterized in that** each subsystem has a message list (3, 3') into which respective call messages (AN1 - AN4) are entered, the synchronized forwarding involving the call messages (AN1 - AN4) which correspond to the call message (AN1 - AN4) of the one subsystem being forwarded in line with the corresponding multi-channel tasks (M1 - M3) of the other subsystems.

3. Synchronization method according to Claim 1 or 2, **characterized in that** if a single-channel task (E1 - E5) and/or an interrupt routine (I1 - I5) which are not executed redundantly by the subsystems call a multi-channel task (M1 - M3) then the corresponding call message (AN1 - AN4) is forwarded to the other subsystems, where it is entered into the respective message list (3, 3'), is read and is forwarded in sync to the corresponding multi-channel task (M1 - M3) of the respective subsystem.

4. Synchronization method according to one of the preceding claims, **characterized in that** if it is necessary to call a single-channel task (E1 - E5) of one of the subsystems then a corresponding call message (AN1 - AN4) is entered into the message list (3, 3') of the one subsystem and the call message (AN1 - AN4) is read from the message list (3, 3') and is forwarded to the single-channel task (E1 - E5) which is to be called, the subsystems synchronizing themselves only upon or immediately prior to a subsequent call for a multi-channel task (M1 - M3).

5. Synchronization method according to one of the preceding claims, **characterized in that** if a task (M1 - M3; E1 - E5) currently requires no more computation time then this task (M1 - M3; E1 - E5) forwards a corresponding release message, whereupon the call message (AN1 - AN4) from the message list (3, 3') of the associated subsystem which has the highest priority among the call messages (AN1 - AN4) listed in the message list (3, 3') is forwarded to the corresponding task (M1 - M3; E1 - E5) which is to be called.

6. Synchronization method according to one of the preceding claims, **characterized in that** the call messages (AN1 - AN4) in the respective message list (3, 3') are sorted according to their priority.

7. Synchronization method according to one of the preceding claims, **characterized in that** the priority of a call message (AN1 - AN4) corresponds to the priority of the relevant task (M1 - M3; E1 - E5) which is to be called.

8. Synchronization method according to one of the preceding claims, **characterized in that** the call messages (AN1 - AN4) in the respective message list (3, 3') are sorted according to the priority of the task (M1 - M3; E1 - E5) and/or interrupt routine (I1 - I5) calling them.

9. Synchronization apparatus (1, 1') for an automation system of redundant design comprising at least two subsystems, in which the subsystems control a process by respectively executing a plurality of tasks (M1 - M3; E1 - E5) and by being connected to one another via one or more communication means (2, 2') which they use to synchronize themselves to one another,
**characterized by**
- a message store, particularly in the form of a message list (3, 3'), into which, if it is necessary to call a multi-channel task (M1 - M3) of the respective subsystem which is to be executed redundantly by the subsystems, a corresponding call message (AN1 - AN4) is entered, and
- a message distribution device (4, 4') which is connected to at least one of the communication means (2, 2') and to the message store and which reads the call message (AN1 - AN4) from the message store and forwards it to the corresponding multi-channel task (M1 - M3) which is to be called, the forwarding taking place in sync with the other subsystems.

10. Synchronization apparatus according to Claim 9, **characterized in that** the message distribution device (4, 4'), if it recognizes that a single-channel task (E1 - E5) and/or an interrupt routine which are not executed redundantly by the subsystems call a multi-channel task, forwards the corresponding call message (AN1 - AN4) to the other subsystems for entry into the respective message list (3, 3').

11. Synchronization apparatus according to Claim 9 or 10, **characterized by** a sorting device (5, 5') which sorts the call messages (AN1 - AN4) in the message list (3, 3') according to their priorities.

12. Automation system of redundant design comprising at least two subsystems, in which the subsystems control a process by respectively executing a plurality of tasks and by being connected to one another by a communication means which they use to synchronize themselves to one another, **characterized in that** each subsystem has an associated synchronization apparatus according to one of Claims 9 to 11.

## Revendications

1. Procédé de synchronisation pour un système d'automatisation à structure redondante ayant au moins deux sous-systèmes, les sous-systèmes exécutant pour la commande d'un processus chacun plusieurs tâches (M1 à M3 ; E1 à E5) et se synchronisant entre eux,
**caractérisé par le fait que**
- si une tâche multicanal (M1 à M3) de l'un des sous-systèmes qui doit être exécutée de façon redondante par les sous-systèmes doit être appelée, on enregistre un message d'appel correspondant (AN1 à AN4) dans une mémoire de messages, notamment sous la forme d'une liste de messages (3, 3'), du sous-système, et
- on lit le message d'appel (AN1 à AN4) dans la mémoire de messages et on le retransmet à la tâche multicanal à appeler (M1 à M3), la retransmission s'effectuant de manière synchronisée avec les autres sous-systèmes.

2. Procédé de synchronisation selon la revendication 1, **caractérisé par le fait que** chaque sous-système comporte une liste de messages (3, 3') dans laquelle sont enregistrés des messages d'appel respectifs (AN1 à AN4) et, lors de la retransmission synchronisée, les messages d'appel (AN1 à AN4) correspondant au message d'appel (AN1 à AN4) d'un premier sous-système sont retransmis aux tâches multicanal correspondantes (M1 à M3) des autres sous-systèmes.

3. Procédé de synchronisation selon la revendication 1 ou 2, **caractérisé par le fait que**, si une tâche monocanal (E1 à E5) et/ou une routine d'interruption (I1 à 15), qui ne doivent pas être exécutées de manière redondante par les sous-systèmes, appellent une tâche multicanal (M1 à M3), le message d'appel correspondant (AN1 à AN4) est retransmis aux autres sous-systèmes où il est enregistré dans la liste de messages respective (3, 3'), lu et retransmis de manière synchronisée à la tâche multicanal correspondante (M1 à M3) du sous-système respectif.

4. Procédé de synchronisation selon l'une des revendications précédentes, **caractérisé par le fait que**, si une tâche monocanal (E1 à E5) de l'un des sous-systèmes doit être appelée, un message d'appel correspondant (AN1 à AN4) est enregistré dans la liste de messages (3, 3') du sous-système, le message d'appel (AN1 à AN4) est lu dans la liste de messages (3, 3') et est retransmis à la tâche monocanal à appeler (E1 à E5), les sous-systèmes ne se synchronisant que lors d'un appel consécutif d'une tâche multicanal (M1 à M3) ou immédiatement avant celui-ci.

5. Procédé de synchronisation selon l'une des revendications précédentes, **caractérisé par le fait que** si une tâche (M1 à M3 ; E1 à E5) n' a plus besoin de temps de calcul, cette tâche (M1 à M3 ; E1 à E5) retransmet un message de libération correspondant, à la suite de quoi le message d'appel (AN1 à AN4) de la liste de messages (3, 3') du sous-système associé qui a la plus grande priorité parmi les messages d'appel (AN1 à AN4) énumérés dans la liste de messages (3, 3') est retransmis à la tâche à appeler correspondante (M1 à M3 ; E1 à E5).

6. Procédé de synchronisation selon l'une des revendications précédentes, **caractérisé par le fait que** les messages d'appel (AN1 à AN4) de la liste de messages respectives (3, 3') sont triés selon leur priorité.

7. Procédé de synchronisation selon l'une des revendications précédentes, **caractérisé par le fait que** la priorité d'un message d'appel (AN1 à AN4) correspond à la priorité de la tâche à appeler correspondante (M1 à M3 ; E1 à E5).

8. Procédé de synchronisation selon l'une des revendications précédentes, **caractérisé par le fait que** les messages d'appel (AN1 à AN4) de la liste de messages respective (3, 3') sont triés selon la priorité de la tâche (M1 à M3 ; E1 à E5) les appelant et/ou de la routine d'interruption (I1 à I5) les appelant.

9. Dispositif de synchronisation (1, 1') pour un système d'automatisation à structure redondante ayant au moins deux sous-systèmes, les sous-systèmes exécutant pour la commande d'un processus chacun plusieurs tâches (M1 à M3 ; E1 à E5) et étant reliés entre eux par l'intermédiaire d'un ou plusieurs moyens de communication (2, 2') par l'intermédiaire duquel ou desquels ils se synchronisent entre eux,
**caractérisé par**
- une mémoire de messages, notamment sous la forme d'une liste de messages (3, 3'), dans laquelle, si une tâche multicanal (M1 à M3) du sous-système respectif doit être appelée, laquelle est à exécuter de manière redondante par les sous-systèmes, un message d'appel correspondant (AN1 à AN4) est enregistré,
et
- un dispositif de distribution de messages (4, 4') relié à au moins l'un des moyens de communication (2, 2') et à la mémoire de messages, lequel lit le message d'appel (AN1 à AN4) dans la mémoire de messages et le retransmet à la tâche multicanal à appeler correspondante (M1 à M3), la retransmission s'effectuant de manière synchronisée avec les autres sous-systèmes.

10. Dispositif de synchronisation selon la revendication 9, **caractérisé par le fait que** le dispositif de distribution de messages (4, 4'), lorsqu'il reconnaît qu'une tâche monocanal (E1 à E5) et/ou une routine d'interruption qui n'ont pas à être exécutées de manière redondante par les sous-systèmes appellent une tâche multicanal, retransmet le message d'appel correspondant (AN1 à AN4) aux autres sous-systèmes pour l'enregistrement dans la liste de messages respective (3, 3').

11. Dispositif de synchronisation selon la revendication 9 ou 10, **caractérisé par** un dispositif de tri (5, 5') qui trie les messages d'appel (AN1 à AN4) de la liste de messages (3, 3') selon leurs priorités.

12. Système d'automatisation à structure redondante avec au moins deux sous-systèmes, les sous-systèmes exécutant pour la commande d'un processus chacun plusieurs tâches et étant reliés entre eux par un moyen de communication par l'intermédiaire duquel ils se synchronisent entre eux, **caractérisé par le fait qu'**un dispositif de synchronisation selon l'une des revendications 9 à 11 est associé à chaque sous-système.
